# EUROPÄISCHE PATENTSCHRIFT

(11) **EP 1 487 659 B1**
(45) Veröffentlichungstag und Bekanntmachung des Hinweises auf die Patenterteilung: **02.05.2007**
(21) Anmeldenummer: 03714699.0
(22) Anmeldetag: 19.03.2003
(51) Int. Cl.: B60K 35/00

(54) **KOMBIINSTRUMENT UND FAHRZEUG MIT EINEM KOMBIINSTRUMENT**
COMBINED INSTRUMENT AND VEHICLE PROVIDED WITH A COMBINED INSTRUMENT
INSTRUMENT COMBINÉ ET VEHICULE ÉQUIPE D'UN INSTRUMENT COMBINÉ

(30) Priorität: 28.03.2002 DE 10214200
(43) Veröffentlichungstag der Anmeldung: 22.12.2004
(73) Patentinhaber: SIEMENS AKTIENGESELLSCHAFT, 80333 München (DE)
(72) Erfinder: ADAMS, Jürgen, 78052 Villingen-Schweningen (DE); SCHLAGETER, Thomas, 78120 Furtwangen (DE); WOLF, Jürgen, 78048 Villingen-Schweningen (DE)
(86) Internationale Anmeldenummer: PCT/DE2003/000910
(87) Internationale Veröffentlichungsnummer: WO 2003/082621

(56) Entgegenhaltungen:
- WO-A-97/31803
- DE-A- 19 852 873
- US-A- 4 831 366
- US-A- 5 296 868
- US-A- 5 386 216

## Beschreibung

Die vorliegende Erfindung betrifft ein Kombiinstrument zum Einbau in das Armaturenbrett eines Fahrzeuges und ein Fahrzeug mit einem solchen Kombiinstrument.

Kombiinstrumente, die im Armaturenbrett eines Fahrzeuges im Sichtbereich des Fahrers angebracht sind, enthalten in der Regel neben einem Tachometer, Drehzahlmesser oder dergleichen noch Kontrolllampen und andere Anzeigeinstrumente. Es handelt sich dabei ausschließlich um optische Anzeigen, die zumeist mit einer Abschirmung versehen sind, um die Kontrastwirkung und Erkennbarkeit der Anzeige auch bei ungünstigen äußeren Lichtverhältnissen zu verbessern. Derartige Blendschutzvorrichtungen sind jedoch nur geeignet, aus bestimmten Richtungen einfallendes Licht einigermaßen ausreichend abzuschirmen.

Die US 4831366 offenbart ein Kombiinstrument gemäß dem Oberbegriff des Anspruchs 1, sowie ein Fahrzeug mit einem solchen Kombiinstrument.

In der DE 199 48 491 A1 ist ein Kombiinstrument beschrieben, bei dem zur Verbesserung der Ablesbarkeit der darin angeordneten Anzeigeeinheiten die Möglichkeit geschaffen ist', das Instrument oder Teile davon um mindestens eine Raumachse zu schwenken. Das gesamte Kombiinstrument oder einzelne Anzeigeeinheiten sind zu diesem Zweck beweglich in dem Armaturenbrett beziehungsweise einem Gehäuse angebracht. Für das Schwenken oder Kippen des Kombiinstrumentes können eigens vorgesehene Stellmotore eingebaut sein, die über geeignet angebrachte und vom Fahrer zu betätigende Bedienelemente gesteuert werden.

Nachteilig an einem solchen System ist, dass der Fahrer selber Bedienungselemente betätigen muss, um die Anzeige in dem Kombiinstrument blendfrei und kontrastreich einzustellen. Das Schwenken des Kombiinstrumentes beim Auftreten von Blendwirkungen kann mehrere Sekunden dauern. Wenn auf Anhieb keine geeignete Position gefunden wird, muss das Ausrichten des Kombiinstrumentes wiederholt werden. Das Einstellen und Nachstellen des Kombiinstrumentes ist daher mit einem gewissen Aufwand verbunden, der während der Fahrt zusätzliche Aufmerksamkeit des Fahrers beansprucht und daher ein Sicherheitsrisiko darstellt.

Aufgabe der vorliegenden Erfindung ist es, anzugeben, wie bei einem Kombiinstrument eine Blendwirkung durch äußere Lichteinstrahlung vermieden werden kann, ohne dass die Bedienung des Fahrzeugs umständlicher wird und den Fahrer zusätzlich beansprucht.

Diese Aufgabe wird mit dem Kombiinstrument mit den Merkmalen des Anspruches 1 bzw. mit dem Fahrzeug mit den Merkmalen des Anspruches 6 gelöst. Ausgestaltungen ergeben sich aus den abhängigen Ansprüchen.

Das Kombiinstrument besitzt eine Antriebsvorrichtung, mit der die Position einer in dem Kombiinstrument vorhandenen optischen Anzeigevorrichtung bezüglich des Fahrzeugs verändert werden kann. Das geschieht automatisch durch eine eingebaute elektronische Schaltung, die die Antriebsvorrichtung in Abhängigkeit von einem oder mehreren eingegebenen Parameterwerten steuert. Diese Parameterwerte können auf Grund unterschiedlicher Messwerte ermittelt werden oder aus den in einer Datenbank abgespeicherten Werten, gegebenenfalls in Verbindung mit Messwerten, in einer zu der elektronischen Schaltung gehörenden Auswerteeinheit ermittelt werden. Eine solche Auswerteeinheit ist dafür vorgesehen, einen oder mehrere eingegebene Parameterwerte zu verarbeiten, um einen oder mehrere Parameterwerte zur Steuerung der Antriebsvorrichtung zu erhalten.

Die Position der Anzeigevorrichtung kann verändert werden, indem das Kombiinstrument als Ganzes geschwenkt wird; oder es werden nur Teile des Kombiinstrumentes mit darin eingebauten Anzeigevorrichtungen oder die Gehäuse oder Chassis einzelner Anzeigevorrichtungen oder von Gruppen von Anzeigevorrichtungen geschwenkt. Im Folgenden wird das jeweils der Einfachheit halber als eine Änderung der Position der Anzeigevorrichtung bezeichnet.

Bei bevorzugten Ausgestaltungen des Kombiinstrumentes oder eines Fahrzeugs mit dem Kombiinstrument ist mindestens ein Lichtsensor vorhanden, mit dem die äußeren Lichtverhältnisse festgestellt werden und so eine möglicherweise auftretende Blendwirkung detektiert wird. Es können mehrere Lichtsensoren in oder an dem Fahrzeug oder direkt in dem Kombiinstrument angebracht sein, insbesondere ein Vierquadrantenlichtsensor, um damit die Richtung einfallenden Störlichtes festzustellen und die Position der Anzeigevorrichtung so ändern, das Kombiinstrument oder Teile des Kombiinstrumentes so schwenken zu können, dass die Blendung ganz oder zumindest teilweise beseitigt wird.

Es folgt eine genauere Beschreibung von Beispielen des Kombiinstrumentes und dessen Ausgestaltungen sowie Anordnungen mit einem derartigen Kombiinstrument anhand der Figuren 1 bis 4.

Die Figur 1 zeigt eine schematische Darstellung eines Ausführungsbeispiels eines erfindungsgemäßen Kombiinstrumentes.

Die Figur 2 zeigt ein Prinzipschaltbild eines geeigneten Systems zur Ansteuerung des Kombiinstrumentes zur automatischen Nachführung.

Die Figur 3 zeigt einen typischen Strahlengang zwischen einer Störlichtquelle und dem Fahrer.

Die Figur 4 zeigt ein Isokontrastdiagramm.

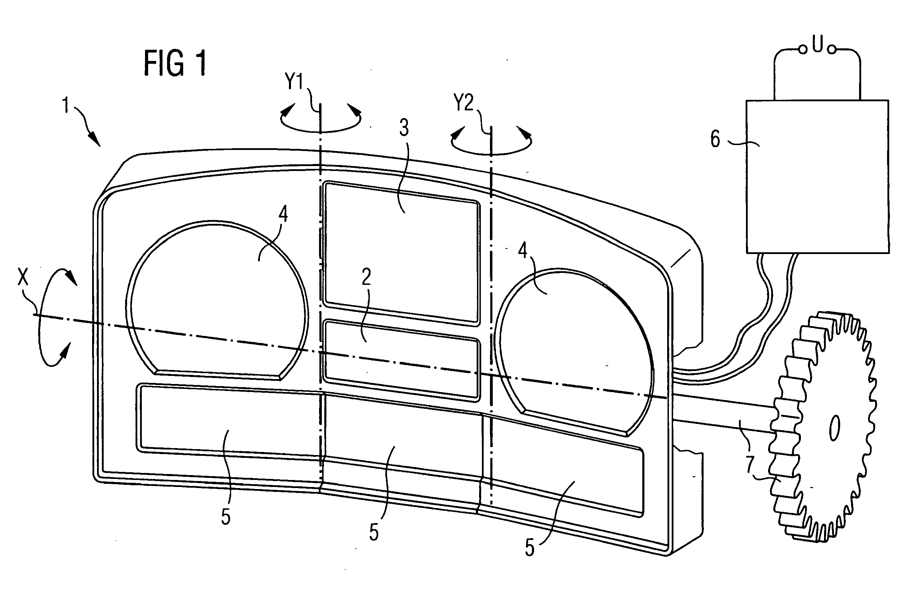

Die Figur 1 zeigt ein Kombiinstrument, bei dem in einem Gehäuse 1 eine Mehrzahl von optischen Anzeigen angebracht ist. Dieses Kombiinstrument kann in das Armaturenbrett eines Fahrzeugs eingebaut werden. Bei dem in der Figur 1 als Beispiel dargestellten Kombiinstrument sind auf der Vorderseite ein Lichtsensor 2, ein Vierquadrantenlichtsensor 3, analoge Anzeigeeinheiten 4 und Kontrollleuchten 5 eingebaut. Das Kombiinstrument lässt sich um eine horizontale Achse X neigen; die links und rechts vorhandenen Seitenteile lassen sich jeweils um eine vertikale Achse Y1, Y2 einschwenken. In dem Kombiinstrument ist eine elektronische Schaltung 6, z. B. in der Form eines Halbleiterchips, eingebaut, mit der die Antriebsvorrichtung 7 gesteuert wird. Die Antriebsvorrichtung 7 kann im Prinzip beliebig, vorzugsweise mit Stellmotoren ausgebildet sein. In dem in der Figur 1 dargestellten Beispiel ist nur schematisch ein Zahnrad eingezeichnet, um hier einen Stellmotorantrieb für das Schwenken um die horizontale Achse X anzudeuten. Die genaue Ausgestaltung der beweglichen Lagerung des Kombiinstrumentes in dem Armaturenbrett und die Ausgestaltung der Antriebsvorrichtung sind in das Belieben des Fachmannes gestellt oder können den Umständen entsprechend ausgewählt werden und erfordern nur die aus dem Fachgebiet der Servosteuerung an sich bekannten Mittel.

Bei einem besonders bevorzugten Ausführungsbeispiel einer automatischen Nachführung der Anzeigevorrichtung eines Kombiinstrumentes sind im Wesentlichen fünf Teile vorhanden: 1. das Gehäuse mit den daran angebrachten optischen Anzeigeinstrumenten, 2. mindestens ein Lichtsensor, 3. eine elektronische Schaltung mit einer Verarbeitungseinheit und einer Steuerungseinheit, 4. Stellglieder und 5. eine Sensorik, die Richtungsänderungen des Fahrzeugs detektiert. Der Aufbau eines solchen Systems zur Änderung der Position der Anzeigevorrichtung wird im Folgenden anhand seines Funktionsprinzips dargestellt.

Das Nachführungssystem wird aktiviert, wenn sich eine störende Lichtquelle bemerkbar macht. Ein solcher Störstrahler kann z. B. die Sonne sein, deren Strahlung während der Fahrt durch die Scheiben auf das Armaturenbrett und die optische Anzeige des Kombiinstrumentes fällt. Dadurch wird der Kontrast der optischen Anzeige verringert; es kann auch zu Blendungen des Fahrers kommen. Eine lichtempfindliche Sensorik stellt das Auftreten des Störlichtes fest. Dazu ist mindestens ein Lichtsensor 2, mit dem die Intensität der störenden Strahlung gemessen wird, vorhanden. Es kann auch eine Anordnung aus Lichtsensoren vorhanden sein, mit denen überdies noch der Einfallswinkel der störenden Strahlung detektiert werden kann, wie zum Beispiel mit dem Vierquadrantenlichtsensor 3.

Zusätzlich können auch noch Navigationsdaten des Fahrzeugs ermittelt werden, wozu insbesondere gehören: Koordinaten zur Angabe der momentanen Position des Fahrzeugs in einem erdfesten Bezugssystem oder bezüglich einer vorgegebenen Fahrstrekke, Richtungskoordinaten und Betrag der Geschwindigkeit zur Angabe der Geschwindigkeit des Fahrzeugs, Neigungswinkel des Fahrzeugs zur horizontalen Ebene, Häufigkeit und Ausmaß der Änderungen der Fahrtrichtung, gegebenenfalls Satellitennavigationsdaten, die Uhrzeit und/oder aktuelle Routeninformation aus einem Routenplaner oder Streckenatlas.

Damit die automatische Änderung der Position der Anzeigevorrichtung nicht zu überzogenen und zu häufigen Bewegungen der Anzeigevorrichtung führt, wird vorzugsweise mit einer Sensorik zur Feststellung der Richtungsänderungen des Fahrzeugs ermittelt, ob der Fahrer im Moment relativ ruhig fährt bzw. nur geringe Lenkbewegungen durchführt oder ob sich die Richtung des Fahrzeugs kurzzeitig immer wieder wesentlich ändert. Bei einer Fahrweise mit geringen Richtungsänderungen ist es zweckmäßig, die Anzeigevorrichtung in eine blendfreie Position zu schwenken. Bei kurzzeitigen ständigen Richtungsänderungen wird davon ausgegangen, dass eine Blendwirkung durch Störlicht nur vorübergehend auftritt und folglich ein ständiges Nachregeln der Position der Anzeigevorrichtung überflüssig wäre und obendrein als störend empfunden würde.

Die Antriebsvorrichtung des Kombiinstrumentes wird von einer Auswerteeinheit oder einer Verarbeitungseinheit, die die Messwerte der Lichtsensoren und/oder der Bewegungssensoren auswertet, dabei aber auch Parameter berücksichtigen kann, die - wie z. B. eine winkelabhängige Stärke des Kontrastes - von den optischen Eigenschaften der Anzeigevorrichtungen selbst abhängen, automatisch so gesteuert, dass die Position der Anzeigevorrichtung passend zu den aktuellen Lichtverhältnissen verändert wird. Diese Nachführung erfolgt so lange, bis die Blendwirkung eliminiert oder der Kontrast zumindest verbessert worden ist.

Die Anzahl und Ausrichtung der Achsen, um die das Kombiinstrument oder Teile des Kombiinstrumentes gedreht werden kann beziehungsweise gedreht werden können, ist dabei im Prinzip beliebig. Es kann im Einzelfall genügen, wenn das Kombiinstrument nur um eine Achse, z. B. die horizontale Achse X in Figur 1, die aber auch etwas schräg zur Horizontalen ausgerichtet sein kann, nach vorne geneigt werden kann. Die genauen Ausgestaltungen werden vom Fachmann geeignet gewählt, da es im Einzelfall von den reflektierenden Oberflächen des Fahrzeuges und der Beschaffenheit der Fenster abhängt, welche Blendwirkungen auftreten können.

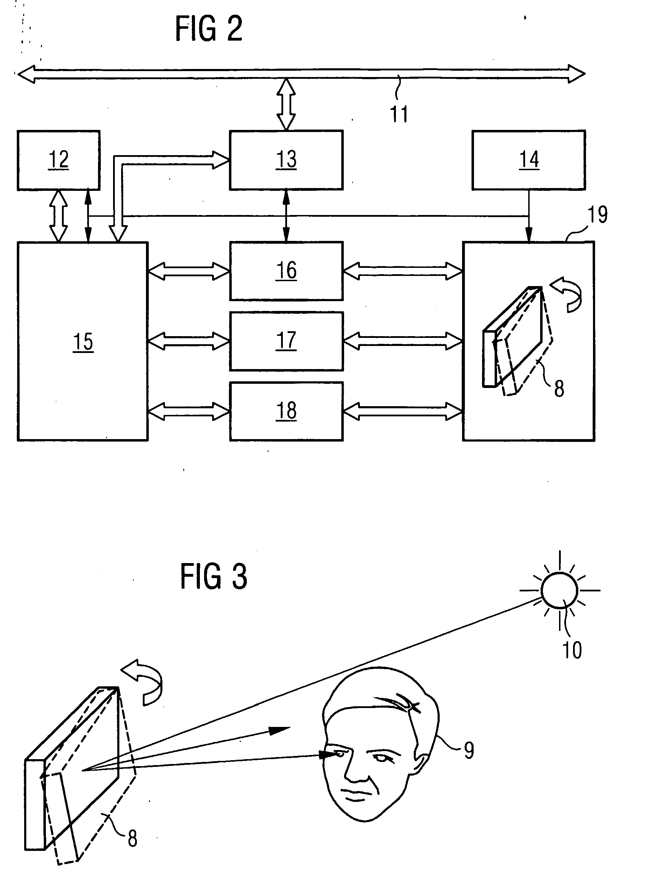

In der Figur 2 ist ein Prinzipschaltbild für die Ansteuerung der Antriebsvorrichtung zur Änderung der Position der Anzeigevorrichtung dargestellt. Der obere Doppelpfeil bedeutet darin die Übertragung von Informationen in einem Netzwerk 11 (zum Beispiel K-Line, CAN, MOST [Media Oriented System Transport]), in dem alle notwendigen Datensätze, wie die Störlichthelligkeit, eine an die Empfindlichkeit des Auges angepasste Korrektur, Einfallswinkel der Strahlung, Lenkbewegung, Art der optischen Anzeige und Navigations- oder Positionsdaten, übertragen werden. Der Übertrager 13 empfängt die Daten aus dem Netzwerk und stellt sie dem programmierbaren Verarbeitungsmodul 15 zur Verfügung. Das Verarbeitungsmodul 15 bereitet die Informationen mit Hilfe des Speichers 12 auf. Der Speicher 12 beinhaltet alle zum Betrieb der Nachführung des Kombiinstrumentes und der Änderung der Position der Anzeigevorrichtung notwendigen Parameter und Daten (z. B. Daten eines Isokontrastdiagrammes, den Reflexionstyp der Anzeigevorrichtung und dergleichen).

Das Verarbeitungsmodul 15 kommuniziert mit einer Reihe von Treibern, in diesem Beispiel einem ersten Treiber 16 für den Lichtsensor oder eine CCD-Kamera, einem zweiten Treiber 17 für die Stellmotoren der Antriebsvorrichtung und einem dritten Treiber 18 für eine Hintergrundbeleuchtung der Anzeigevorrichtung. Der erste Treiber 16 überträgt die Messdaten der Lichtintensität und des Einfallswinkels des Störlichtes, die der Lichtsensor oder die CCD-Kamera detektiert. Der zweite Treiber 17 ermöglicht die Lagesteuerung der Anzeigevorrichtung des Kombiinstrumentes. Der dritte Treiber 18 steuert die Hintergrundbeleuchtung oder Frontbeleuchtung, je nach der Ausgestaltung der Anzeigevorrichtungen.

Die Anordnung 19, die hier das Kombiinstrument mit den optischen Anzeigevorrichtungen, die Antriebsvorrichtung und die Sensorik umfasst, wird auf diese Weise mit elektronischen Schaltungen verbunden, so dass die Position der optischen Anzeigevorrichtung 8 je nach Bedarf automatisch geändert werden kann. Die Treiber arbeiten vorzugsweise bidirektional, so dass z. B. eine Überprüfung der eingestellten Parameter oder sogar der Einsatz von Regelungen, insbesondere bei den Stellmotoren, möglich ist. Die zum Betrieb der Nachführung des Kombiinstrumentes notwendigen Spannungen werden über ein Bordspannungsmodul 14 aus dem Bordspannungsnetz des Fahrzeugs übertragen und aufbereitet. Während in dem Prinzipschaltbild der Figur 2 Informationsübertragungen jeweils mit konturierten, nicht ausgefüllten Doppelpfeilen dargestellt sind, ist die Spannungsversorgung der Komponenten mit einer von dem Bordspannungsmodul 14 ausgehenden und sich in Pfeile verzweigenden einfachen Linie dargestellt.

Die Blendfreiheit und der Kontrast der Anzeigevorrichtung werden bereits durch eine geringe Drehung oder Neigung des Kombiinstrumentes gegenüber der Richtung, aus der das Störlicht einfällt, verbessert. Das wird anhand der Figur 3 erläutert, in der ein typischer Strahlengang zwischen einer Störlichtquelle und dem Fahrer eingezeichnet ist. Hier sind eine optische Anzeigevorrichtung 8, das Gesicht 9 des Fahrers und die Sonne 10 als Störlichtquelle dargestellt. Das Sonnenlicht wird von der Anzeige in das Auge des Fahrers reflektiert.

Die bevorzugte Drehrichtung des Kombiinstrumentes ist von dem darin eingesetzten Typ der optischen Anzeigevorrichtung abhängig. Es werden reflexive Anzeigen, bei denen zum Ablesen Licht auf die Vorderseite auftreffen muss, und transmissive Anzeigen, bei denen die Anzeigeelemente von hinten ausgeleuchtet werden und zumeist eine Hintergrundbeleuchtung vorgesehen ist, unterschieden. Eine diffuse Reflexion des auf die Anzeige auftreffenden Lichts erzeugt einen beachtlichen Anteil von Streulicht oder Sekundärlicht, der bei der Änderung der Position der Anzeigevorrichtung in geeigneter Weise ausgeblendet werden soll. Beim Auftreten von Störlicht mit erheblichem diffus reflektiertem Anteil wird die Anzeigevorrichtung vorzugsweise aus der Richtung des Lichteinfalls gedreht. Der Einfallswinkel des Lichts zum Lot auf die reflektierende Fläche der Anzeige vergrößert sich so, und die unterschiedlichen Richtungen des reflektierten Lichtes werden wirkungsvoll aus dem Sichtfeld des Fahrers gedreht.

So genannte transflexive Displays sind transmissive Displays, bei denen ein das von vorne einfallende Licht reflektierender Hintergrund vorhanden ist, der zusätzlich mit einer eigenen Beleuchtung ausgestattet sein kann. Die optischen Anzeigeelemente bilden vor dem reflektierenden und gegebenenfalls selbst leuchtenden helleren Hintergrund einen dunkleren Kontrast. Solche transflexiven Anzeigevorrichtungen werden beim Auftreten von Störlicht vorzugsweise so zu der Störlichtquelle hin gedreht, dass das Störlicht steiler, das heißt mit kleinerem Einfallswinkel zum Lot, auf den reflektierenden Hintergrund des Displays auftrifft. Das hat den Vorteil, dass das Störlicht auf diese Weise den Hintergrund des Displays zusätzlich aufhellt. Die Lichtausstrahlung pro Flächeneinheit des Hintergrunds des Displays kann damit erhöht werden, und die elektrische Leistung der eingebauten Hintergrundbeleuchtung kann entsprechend verringert werden, wodurch die Lebensdauer der betreffenden Beleuchtungsvorrichtung verlängert und Energie eingespart werden kann.

In der Figur 3 ist das Beispiel einer transflexiven Anzeigevorrichtung 8 dargestellt, die einen zumindest teilweise reflektierenden Hintergrund besitzt und die beim Auftreffen von (in diesem Beispiel von der Sonne 10 ausgehendem) Störlicht in der Richtung des eingezeichneten Pfeiles so gedreht wird, dass der Winkel zwischen der Richtung des einfallenden Lichtes und der Richtung des reflektierten Lichtes verringert wird. Die automatische Änderung der Position der Anzeigevorrichtung beim Auftreten einer Störlichtquelle erfolgt hierbei also stets so, dass der Winkel zwischen einer Richtung, aus der Licht von der Störlichtquelle her einfällt, und der für das Ablesen der Anzeige vorgesehenen Vorzugsrichtung verkleinert wird. Gleichzeitig wird die elektrische Leistung der eingebauten Hintergrundbeleuchtung verringert. Eine deutliche Verbesserung des Kontrastes wird in der Regel bereits erreicht, wenn das Display um nur wenige Winkelgrade verstellt oder nachgeführt wird.

Ein in der Anordnung mit dem Kombiinstrument verwendbarer Lichtsensor besteht im einfachsten Fall aus einem einzelnen lichtempfindlichen Element, das z. B. nach Art des Lichtsensors 2 in Figur 1 direkt in das Kombiinstrument eingebaut sein kann. Der Lichtsensor kann aber auch an anderen Stellen in dem oder an dem Fahrzeug angebracht sein. Mit dem Lichtsensor kann zum Beispiel die tatsächlich vorhandene Intensität der möglicherweise durch Wolken oder Fahrzeugteile abgeschirmten Sonnenstrahlung direkt gemessen werden. Eine Auswerteeinheit kann aus Daten zur Position des Fahrzeugs und aus der aktuellen Uhrzeit den Sonnenstand relativ zu der momentanen Ausrichtung des Fahrzeugs berechnen. Unter Berücksichtigung der gemessenen Lichtintensität wird die Position der Anzeigevorrichtung beibehalten öder geeignet geändert.

Weniger Rechenleistung in der Auswerteeinheit erfordert der Einsatz eines Mehrkomponentenlichtsensors, insbesondere eines Vierquadrantenlichtsensors 3, wie er in der Figur 1 als Beispiel auf der Vorderseite des Kombiinstrumentes 1 eingezeichnet ist. Es handelt sich dabei um einen in vier separate Bereiche unterteilten Lichtsensor bzw. eine Anordnung von vier separaten Lichtsensoren gemäß den Quadranten eines zweidimensionalen kartesischen Koordinatensystems. Ein Vierquadrantenlichtsensor erlaubt eine analoge Berechung der Lichtintensität und der Einfallsrichtung einer Störstrahlung mittels geeigneter Verstärkerglieder (Teiler, Addierer usw.). Es ist keine gesonderte Eingabe von Positionsparametern in die Rechnung erforderlich.

Eine detailliertere Information über die Lage und die Intensität einer oder mehrerer Störlichtquellen kann durch Einsatz einer CCD-Kamera mit Auswertelogik und entsprechender Optik gewonnen werden. Mit einer solchen Ausrüstung ist das System in der Lage, Störstrahler und die Art der Reflexion auch dann zu detektieren, wenn der Einfluss der Störstrahler nur relativ gering ist. Außerdem ist der jeweilige Grad der von mehreren verschiedenen Störstrahlern kommenden Störungen bestimmbar, so dass die Änderung der Position der Anzeigevorrichtung auf die Position und Richtung der am meisten störenden Lichtquelle abgestimmt werden kann. Auch ein in der Nacht störendes weißes T-Shirt des Fahrers kann als solches erkannt werden, und die Anzeigevorrichtung kann dementsprechend ausgerichtet werden.

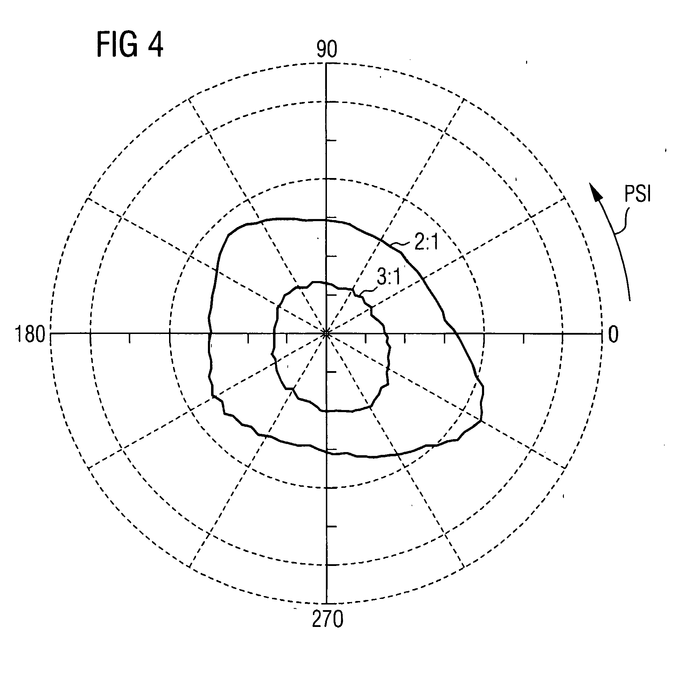

Eine besonders geeignete Ausgestaltung der für die elektronische Schaltung vorgesehenen Auswerteeinheit kann durch eine Ausrüstung der Auswerteeinheit mit einem so genannten Teach-in-Modul erreicht werden. Ein solches Teach-in-Modul ist in der Lage, spezielle Parameter, die für den optischen Zustand der Anzeigevorrichtung maßgeblich sind, zu laden und auszuwerten, so dass diese das System beeinflussenden Parameter bei der Nachführung der Anzeigevorrichtung des Kombiinstrumentes als Teach-in-Parameter entsprechend berücksichtigt werden können. Als Teach-in-Parameter kommen insbesondere die folgenden Parameter in Betracht: signifikante Daten aus einem Isokontrastdiagramm, wie es als Beispiel in der Figur 4 abgebildet ist, Typ der Anzeigevorrichtung (reflexiv, transmissiv, transflexiv), Reflektortyp (insbesondere Vorhandensein einer Hintergrundbeleuchtung) und die maximale und minimale Intensität sowie die Lichtfarbe einer vorhandenen Hintergrundbeleuchtung. Auch der Entspiegelungsgrad als Funktion der Wellenlänge des Lichtes, der z. B. mit einer durchsichtigen Abdeckung des Kombiinstrumentes mit einer darauf aufgebrachten Entspiegelungsschicht erreicht wird, kann hier berücksichtigt werden.

Die Stellglieder zur Nachführung des Kombiinstrumentes sind im einfachsten Fall handelsübliche Schrittmotoren, die mit geeigneten Treibern versehen winkelgenau das Kombiinstrument drehen. In der Regel sind die Motoren am Chassis oder Gehäuse des Kombiinstrumentes aufgehängt, so dass die Anzeigevorrichtung, die Antriebsvorrichtung und die elektronische Schaltung in einem modularen Aufbau integriert sind. Je nach Ausführungsform kann es genügen, wenn nur ein Teil des Kombiinstrumentes gedreht wird; insbesondere können einzelne Anzeigevorrichtungen mit kleinen Abmessungen auch für sich allein beweglich in dem Gehäuse angeordnet sein, so dass deren Position oder Ausrichtung auch mittels elektromagnetischer oder piezoelektrischer Stellglieder verstellt werden kann. Der Konstruktion eines dynamischen Lautsprechers ähnlich wird das Display in diesem Fall an einer (Tauch-)Spule oder einem Piezokristall angebracht. Derartige Stellglieder haben den besonderen Vorteil, dass eine permanente Nachführung der Anzeigevorrichtung (fast) ohne zeitliche Verzögerung ("lag") möglich ist.

Damit auffallende und möglicherweise irritierende Bewegungen des Kombiinstrumentes oder einzelner Anzeigevorrichtungen mit großen Verstellwinkeln nicht ständig durchgeführt werden, wird vorzugsweise stets überprüft, ob das Fahrzeug seine Richtung einigermaßen konstant beibehält. Wenn ein Satellitennavigationssystem in das Informationssystem des Fahrzeugs integriert ist, kann statt dessen auch die momentane Position des Fahrzeugs auf der tatsächlichen Fahrstrecke bestimmt oder mit einer vom Fahrer einprogrammierten Wegstrecke verglichen werden, so dass die Nachführung der Anzeigevorrichtung des Kombiinstrumentes auf Grund einer von der Auswerteeinheit durchgeführten Berechnung weitgehend störungsfrei und effektiv gesteuert werden kann.

Das Kombiinstrument und die Anordnung des Kombiinstrumentes mit einem Lichtsensor und/oder einem Bewegungssensor bildet ein automatisiertes System zur Verbesserung der Ablesbarkeit der Anzeigen, mit dem insbesondere die Lebensdauer von CCFLhinterleuchteten Displays verlängert werden kann. Das komplette Kombiinstrument kann in seiner Position verändert werden; es ist aber auch möglich, das Kombiinstrument so auszugestalten, dass nur Teile davon oder die darin eingesetzten Anzeigevorrichtungen selbst geschwenkt werden. Wegen des hiermit erreichten besseren Kontrastes kann die von einer eingebauten Beleuchtungsvorrichtung erzeugte Grundhelligkeit des Anzeigeinstrumentes geringer eingestellt und dadurch die Lebensdauer der Beleuchtungsvorrichtung verlängert werden.

Ein wesentlicher Vorteil der automatischen Änderung der Position oder automatischen Nachführung der Anzeigevorrichtung ist, dass der Fahrer nicht noch zusätzlich Bedienelemente zum Steuern der Antriebsvorrichtung während der Fahrt betätigen muss und die richtige, das heißt blendfreie, Position der Anzeigevorrichtung obendrein noch durch Blicke auf das Kombiinstrument kontrollieren muss. Bei der Ermittlung der jeweils optimalen Position der Anzeigevorrichtungen können auch winkelabhängige Kontrasteigenschaften in die Rechnung einbezogen werden. Die elektronische Schaltung kann dafür vorgesehen sein, die Position der Anzeigevorrichtung nur dann zu verändern, wenn Änderungen der Fahrtrichtung nach Häufigkeit und Ausmaß während eines vorgegebenen Zeitintervalls unterhalb einer Vorgabe geblieben sind.

Zusätzlich zu der automatischen Steuerung können Mittel vorgesehen sein, die dem Fahrer eine manuelle Einstellung der Position des Kombiinstrumentes erlauben, insbesondere kann die automatische Nachführung abschaltbar ausgeführt sein. Außer dem Einfluss von Störlichtquellen können allgemein die reflektierenden Eigenschaften des Kombiinstrumentes und des Fahrzeuginneren in die Berechnung der Nachführung des Kombiinstrumentes oder der Anzeigevorrichtungen einkalkuliert werden.

## Patentansprüche

1. Kombiinstrument für ein Fahrzeug mit mindestens einer optischen Anzeigevorrichtung (4, 5; 8), deren Position bezüglich des Fahrzeuges geändert werden kann, und
einer Antriebsvorrichtung (7), mit der die Position der Anzeigevorrichtung (4, 5; 8) geändert werden kann, wobei eine elektronische Schaltung (6) zur Steuerung der Antriebsvorrichtung (7) vorhanden ist und
diese elektronische Schaltung (6) dafür vorgesehen ist, die Position der Anzeigevorrichtung (4, 5; 8) in Abhängigkeit von einem oder mehreren eingegebenen Parameterwerten automatisch so zu verändern, dass die Ablesbarkeit der Anzeigevorrichtung verbessert wird, und bei dem die elektronische Schaltung (6) eine Auswerteeinheit umfasst, die dafür vorgesehen ist, einen oder mehrere eingegebene Parameterwerte zu verarbeiten, um einen oder mehrere Parameterwerte zur Steuerung der Antriebsvorrichtung (7) zu erhalten, **dadurch gekennzeichnet, dass** die elektronische Schaltung (6) dafür vorgesehen ist, einen oder mehrere Messwerte von Richtungskoordinaten einer Störlichtquelle, auszuwerten.

2. Kombiinstrument nach Anspruch 1, bei dem die Antriebsvorrichtung (7) dafür vorgesehen ist, die Anzeigevorrichtung (4, 5; 8) um eine bezüglich des Fahrzeugs feste Achse oder um zwei bezüglich des Fahrzeugs feste und nicht zueinander parallele Achsen zu drehen.

3. Kombiinstrument nach Anspruch 1 oder 2, bei dem die elektronische Schaltung (6) dafür vorgesehen ist, einen Messwert einer Lichtintensität auszuwerten.

4. Kombiinstrument nach Ansprüche einem der veorstehenden, bei dem die elektronische Schaltung dafür vorgesehen ist, einen oder mehrere Messwerte oder Daten aus der Gruppe von
- Winkel zwischen der Richtung einer Störlichtquelle und mindestens einer Bezugsrichtung,
- momentane Position des Fahrzeugs,
- Neigungswinkel des Fahrzeugs,
- Richtung und/oder Betrag der Geschwindigkeit des Fahrzeugs,
- Ausmaß und/oder Häufigkeit der Änderung der Fahrtrichtung,
- Satellitennavigationsdaten,
- Uhrzeit und
- Information aus einem Routenplaner oder Streckenatlas auszuwerten.

5. Kombiinstrument nach einem der Ansprüche verstehenden, bei dem die Auswerteeinheit ein Teach-in-Modul umfasst, das dafür vorgesehen ist, Parameter und Daten der Anzeigevorrichtung (4, 5; 8) aus der Gruppe von
- Isokontrastdaten,
- Abhängigkeit der optischen Eigenschaft vom Raumwinkel,
- Entspiegelungagrad als Funktion der Wellenlänge,
- maximaler sowie minimaler Intensität einer Hintergrundbeleuchtung der Anzeigevorrichtung und
- Lichtfarbe einer Hintergrundbeleuchtung der Anzeigevorrichtung
in die Auswerteeinheit in einem von der Auswerteeinheit verarbeitbaren Format einzuspeisen.

6. Fahrzeug mit einem Kombiinstrument nach einem der Ansprüche 1 bis 5 mit
mindestens einem Sensor (2, 3) zur Erfassung der Fahrzeugposition und/oder von äußeren Lichtverhältnissen, bei der der Sensor in oder an dem Fahrzeug oder in dem Kombiinstrument angebracht ist.

7. Fahrzeug nach Anspruch 6, bei dem
eine Sensorik zur Detektion einer jeweiligen Fahrtrichtung vorhanden ist und
die elektronische Schaltung (6) dafür vorgesehen ist, die Position der Anzeigevorrichtung (4, 5; 8) nur dann zu verändern, wenn Änderungen der Fahrtrichtung nach Häufigkeit und Ausmaß während eines vorgegebenen Zeitintervalls unterhalb einer Vorgabe geblieben sind.

8. Fahrzeug nach Anspruch 6 oder 7, bei dem
ein Lichtsensor (2) vorhanden ist, der dafür vorgesehen ist, eine Störlichtquelle, die ein Ablesen der Anzeigevorrichtung (4, 5; 8) erschwert, zu detektieren.

9. Fahrzeug nach Anspruch 8, bei dem
der Lichtsensor ein Mehrkomponentenlichtsensor, ein Vierquadrantenlichtsensor (3) oder eine CCD-Kamera ist.

10. Fahrzeug nach Anspruch 8 oder 9, bei dem
jede automatische Änderung der Position der Anzeigevorrichtung (4, 5; 8) so erfolgt, dass ein Reflexionswinkel einer durch eine Störlichtquelle bewirkten Lichteinstrahlung vergrößert wird.

11. Fahrzeug nach Anspruch 8 oder 9, bei dem
die Anzeigevorrichtung (4, 5; 8) für ein Ablesen in einer Vorzugsrichtung mittels durchtretenden Lichtes einer Hintergrundbeleuchtung vorgesehen ist,
die Anzeigevorrichtung (4, 5; 8) einen zumindest teilweise reflektierenden Hintergrund besitzt und
jede automatische Änderung der Position der Anzeigevorrichtung (4, 5; 8) beim Auftreten einer Störlichtquelle so erfolgt, dass der Winkel zwischen einer Richtung, aus der Licht von der Störlichtquelle her einfällt, und der für das Ablesen vorgesehenen vorzugsrichtung verkleinert wird.

## Claims

1. Combined instrument for a vehicle having at least one visual display device (4, 5; 8) whose position can be changed with respect to the vehicle, and a drive device (7) with which the position of the display device (4, 5; 8) can be changed, wherein an electronic circuit (6) for controlling the drive device (7) is present, and this electronic circuit (6) is provided for changing the position of the display device (4, 5; 8) automatically as a function of one or more input parameter values in such a way that the readability of the display device is improved, and in which the electronic circuit (6) comprises an evaluation unit which is provided for processing one or more input parameter values in order to obtain one or more parameter values for controlling the drive device (7), **characterized in that** the electronic circuit (6) is provided for evaluating one or more measured values of direction coordinates of an interference light source.

2. Combined instrument according to Claim 1, in which the drive device (7) is provided for rotating the display device (4, 5; 8) about an axis which is fixed with respect to the vehicle or about two axes which are fixed with respect to the vehicle and are not parallel to one another.

3. Combined instrument according to Claim 1 or 2, in which the electronic circuit (6) is provided for evaluating a measured value of a light intensity.

4. Combined instrument according to one of the preceding claims, in which the electronic circuit is provided for evaluating one or more measured values or data from the group of
- angles between the direction of an interference light source and at least one reference direction,
- instantaneous position of the vehicle,
- angle of inclination of the vehicle,
- direction and/or absolute value of the speed of the vehicle,
- degree and/or frequency of change of the direction of travel,
- satellite navigation data,
- time and
- information from a route planner or route atlas.

5. Combined instrument according to one of the preceding claims, in which the evaluation unit comprises a teach-in module which is provided for feeding in parameters and data of the display device (4, 5; 8) from the group of
- isocontrast data,
- dependence of the optical property on the spatial angle,
- degree of elimination of reflection as a function of the wavelength,
- maximum and minimum intensity of background lighting of the display device, and
- color of background illumination of the display device
into the evaluation unit in a format which can be processed by the evaluation unit.

6. Vehicle having a combined instrument according to one of claims 1 to 5, having
at least one sensor (2, 3) for sensing the vehicle position and/or external light conditions, in which arrangement the sensor is provided in or on the vehicle or in the combined instrument.

7. Vehicle according to claim 6, in which a sensor system for detecting a respective direction of travel is present, and the electronic circuit (6) is provided for changing the position of the display device (4, 5; 8) only if changes in the direction of travel have stayed, in terms of frequency and degree, below a predefined value during a predefined time interval.

8. Vehicle according to claim 6 or 7, in which a light sensor (2) is present and is provided for detecting an interference light source which makes it more difficult to read the display device (4, 5; 8).

9. Vehicle according to claim 8, in which the light sensor is a multicomponent light sensor, a four-quadrant light sensor (3) or a CCD camera.

10. Vehicle according to claim 8 or 9, in which each automatic change in the position of the display device (4, 5; 8) takes place in such a way that a reflection angle of a light beam produced by an interference light source is increased.

11. Vehicle according to claim 8 or 9, in which the display device (4, 5; 8) is provided for reading in a preferred direction by means of light passing through from a background illumination, the display device (4, 5; 8) having an at least partially reflective background, and each automatic change in the position of the display device (4, 5; 8) taking place when an interference light source occurs, in such a way that the angle between a direction from which light from the interference light source is incident and the preferred direction which is provided for reading is decreased.

## Revendications

1. Instrument combiné destiné à un véhicule, comportant
au moins un dispositif d'affichage optique (4, 5; 8), dont la position peut être modifiée par rapport au véhicule, et
un dispositif d'entraînement (7), avec lequel la position du dispositif d'affichage (4, 5; 8) peut être modifiée,
où il existe un circuit électronique (6) permettant de commander le dispositif d'entraînement (7) et
où ce circuit électronique (6) est prévu pour modifier automatiquement la position du dispositif d'affichage (4, 5; 8) en fonction d'une ou de plusieurs valeurs de paramétrage saisies, de manière telle que la lisibilité du dispositif d'affichage est améliorée, et
où le circuit électronique (6) comprend une unité d'évaluation qui est prévue pour traiter une ou plusieurs valeurs de paramétrage saisies, en vue d'obtenir une ou plusieurs valeurs de paramétrage pour la commande du dispositif d'entraînement (7),
**caractérisé par le fait que** le circuit électronique (6) est prévu pour analyser une ou plusieurs valeurs de mesure de coordonnées de direction d'une source de lumière parasite.

2. Instrument combiné selon la revendication 1, dans lequel le dispositif de commande (7) est prévu pour faire tourner le dispositif d'affichage (4, 5; 8) autour d'un axe fixe par rapport au véhicule ou autour de deux axes fixes par rapport au véhicule et non parallèles l'un par rapport à l'autre.

3. Instrument combiné selon la revendication 1 ou 2, dans lequel
le circuit électronique (6) est prévu pour analyser une valeur de mesure d'une intensité lumineuse.

4. Instrument combiné selon l'une des revendications précédentes, dans lequel
le circuit électronique est prévu pour analyser une ou plusieurs valeurs de mesure ou données faisant partie du groupe
- angle entre la direction d'une source de lumière parasite et au moins une direction de référence,
- position momentanée du véhicule,
- angle d'inclinaison du véhicule,
- direction et/ou valeur de la vitesse du véhicule,
- importance et/ou fréquence de la modification de la direction de marche,
- données de navigation par satellites,
- heure et
- information tirée d'un planificateur d'itinéraire ou atlas routier.

5. Instrument combiné selon l'une des revendications précédentes, dans lequel
l'unité d'évaluation comprend un module d'apprentissage (ou de teach-in) qui est prévu pour alimenter, en un format compatible avec l'unité d'évaluation, l'unité d'évaluation avec des paramètres et des données du dispositif d'affichage (4, 5; 8) faisant partie du groupe de
- données isocontrastes,
- dépendance de la propriété optique de l'angle spatial,
- taux d'anti-reflet en tant que fonction de la longueur d'onde,
- intensité maximum et minimum d'un éclairage d'arrière-plan du dispositif d'affichage et
- couleur d'un éclairage d'arrière-plan du dispositif d'affichage.

6. Véhicule équipé d'un instrument combiné conforme à l'une des revendications 1 à 5 et comportant
au moins un capteur (2, 3) destiné à détecter la position du véhicule et / ou les conditions extérieures de lumière, dans lequel le capteur est monté dans ou sur le véhicule ou dans l'instrument combiné.

7. Véhicule selon la revendication 6, dans lequel
il existe un système sensoriel permettant de détecter dans chaque cas une direction de marche et dans lequel
le circuit électronique (6) est prévu pour ne modifier la position du dispositif d'affichage (4, 5; 8) que si la fréquence et l'importance des variations de la direction de marche restent inférieures à une valeur de consigne pendant un intervalle de temps donné.

8. Véhicule selon la revendication 6 ou 7, dans lequel
il existe un capteur de lumière (2) prévu pour détecter une source de lumière parasite qui rend difficile la lecture du dispositif d'affichage (4, 5; 8).

9. Véhicule selon la revendication 8, dans lequel
le capteur de lumière est un capteur de lumière à plusieurs composantes, un capteur de lumière à quatre quadrants (3) ou une caméra numérique.

10. Véhicule selon la revendication 8 ou 9, dans lequel
chaque modification automatique de la position du dispositif d'affichage (4, 5; 8) a lieu de manière telle qu'un angle de réflexion d'un rayonnement de lumière provoqué par une source de lumière parasite devient plus grand.

11. Véhicule selon la revendication 8 ou 9, dans lequel
le dispositif d'affichage (4, 5; 8) est prévu pour une lecture dans une direction privilégiée au moyen de lumière traversant un éclairage d'arrière-plan,
le dispositif d'affichage (4, 5; 8) a un arrière-plan au moins partiellement réfléchissant et
chaque modification automatique de la position du dispositif d'affichage (4, 5; 8), lors de l'apparition d'une source de lumière parasite, est effectuée de manière telle que l'angle entre une direction, à partir de laquelle la lumière de la source de lumière parasite arrive, et la direction privilégiée prévue pour la lecture devient plus petit.
